# FASCICULE DE BREVET EUROPEEN

(11) **EP 3 838 714 B1**
(45) Date de publication et mention de la délivrance du brevet: **27.12.2023**
(21) Numéro de dépôt: 20210331.3
(22) Date de dépôt: 27.11.2020
(51) Int. Cl.: B62B 5/00, B62B 5/06, B62D 59/02, B60D 1/00, B60D 1/54, A47B 31/02

(54) **CHARIOT À TIMON AMOVIBLE ET BASCULANT PAR PIVOTEMENT**
WAGEN MIT ABNEHMBARER UND SCHWENKBARER DEICHSEL
CART WITH REMOVABLE AND SWIVELLING TILLER

(30) Priorité: 16.12.2019 FR 1914459
(43) Date de publication de la demande: 23.06.2021
(73) Titulaire: Socamel Technologies, 38140 Renage (FR)
(72) Inventeur: FANGET, Robert, 38140 APPRIEU (FR)
(74) Mandataire: Littolff, Denis

(56) Documents cités:
- CH-A- 269 372
- DE-A1-102021 211 754
- DE-A1-102021 211 767
- DE-A1-102021 211 775
- DE-A1-102021 211 796
- DE-A1-102021 211 979
- FR-A1- 2 894 919
- US-A1- 2008 315 624
- US-A1- 2021 213 987

## Description

La présente invention a trait au domaine technique des chariots mobiles par exemple utilisés pour le stockage et la distribution de produits du type denrées alimentaires préparées à l'avance et placées sur un plateau repas, en vue d'être distribuées dans des collectivités, notamment des hôpitaux ou des maisons pour seniors. Dans ce contexte, ce qui est stocké dans chaque chariot doit être à minima maintenu à température, froide ou chaude, voire pouvoir être réchauffé ou refroidi par des dispositifs adaptés intégrés au chariot lui-même.

Traditionnellement, un tel chariot est constitué d'un carter formant volume fermé de forme généralement parallélépipédique, munie d'au moins une porte d'accès placée dans une paroi latérale ou frontale, par rapport au sens du déplacement. Les parois extérieures du volume contenant les plateaux repas délimitent un ou plusieurs compartiments intérieurs, et peuvent notamment comprendre dans le même espace clos des compartiments à température froide et chaude, permettant le stockage des repas à mettre ou à maintenir à la température ou aux températures prévue(s) pour eux.

Pour réduire le temps total des livraisons, les chariots sont de nos jours de plus en plus couramment entraînés par un tracteur qui les véhicule dans les couloirs bordés de chambres, et retourne vers le hub de préparation des plateaux repas dès que les volumes de stockage sont vides. L'opération inverse est mise en oeuvre en fin de repas, pour collecter les plateaux consommés. Pour optimiser la durée des opérations de livraison ou de collecte, il est courant que plusieurs chariots soient attachés à un tracteur, formant en quelque sorte un train de transport des plateaux. Selon la nature des besoins, ou la taille de la structure, les trains peuvent être de taille variable, et il est donc préférable que les modalités d'attachement/détachement des chariots soient simples et ergonomiques.

Des moyens d'attelage notamment basés sur des timons de liaison sont utilisés, réalisant le lien de fixation entre deux chariots consécutifs ou entre le tracteur et le premier (ou l'unique) chariot du train. Ces timons, qui sont en réalité très basiquement des moyens de liaison de type barre rigide allongée solidarisée à l'avant ou à l'arrière de chaque chariot, permettent un montage entre chariots qui leur accorde un degré de liberté rotatif selon un axe vertical, afin que les trains de chariots puissent prendre des virages ou simplement changer d'orientation. Ainsi, ils ont par exemple une liaison mécanique de type crochet à au moins l'une de leurs extrémités, qui s'insère dans une boucle du chariot à atteler.

Pour faciliter le stockage des chariots proprement dits lorsqu'ils ne sont pas en cours d'utilisation, il est aussi prévu de pouvoir déplacer le timon, faute de quoi il augmenterait sensiblement l'empreinte au sol et empêcherait les chariots au repos d'être accolées les uns aux autres, dans le but d'occuper collectivement l'espace le plus réduit possible.

Selon des solutions existantes, les barres servant de timon peuvent être démontables, impliquant cependant des manipulations souvent contraignantes pour l'opérateur, surtout quand elles doivent être répétées. Cette solution n'est de fait guère ergonomique, en particulier parce qu'elle contraint l'utilisateur à une gestuelle se situant presque au niveau du sol, l'obligeant à se baisser fréquemment.

Des configurations alternatives connues comportent par exemple des timons coulissables sous le châssis du véhicule. Leur utilisation n'est toutefois guère plus commode, car il faut - à chaque utilisation - tirer la barre pour la déployer et la rentrer après usage. Avec le temps, cela devient de plus en plus difficile. Compte tenu que la manipulation s'effectue aussi pratiquement au niveau du sol, elle n'est jamais agréable puisqu'il faut systématiquement se baisser, et elle peut devenir franchement pénible parce qu'il n'est pas rare que la liaison mécanique de coulissement se grippe, le temps passant. Pour ce type de chariots, les portes d'accès à l'intérieur du chariot peuvent être latérales ou placées dans la paroi avant ou arrière, par rapport à la direction de roulage.

Il a aussi été imaginé des timons qui sont pivotables ou basculants de manière à pouvoir les ramener au contact de la paroi transversale du chariot au pied de laquelle ils sont arrimés, lorsque la liaison avec un autre chariot est démontée. Cette configuration peut également nécessiter, pour l'opérateur, de se baisser pour saisir l'extrémité libre du timon en vue de la rabattre contre la paroi. Ces timons équipent en général des chariots dont les portes se situent dans une paroi latérale, comme c'est par exemple le cas de la solution montrée dans le document US 2008/0315624 A1. La configuration décrite permet le pivotement du timon entre une position regroupée, au voisinage d'une paroi du chariot, et une position fonctionnelle, pour l'accrochage à un autre chariot, avec un timon qui est fixé à chaque chariot.

Dans les deux derniers cas, les timons sont installés à demeure sur les chariots, bien qu'éventuellement démontables moyennant la possession des outils adéquats, ce qui implique deux conséquences principales : cette configuration nécessite la fabrication d'un timon par chariot d'une part, et elle permet d'autre part de contourner aisément les règles de sécurité qui imposent en principe de ne pas constituer de trains comportant plus de trois chariots attachés au tracteur.

La présente invention remédie aux inconvénients mentionnés ci-dessus, en proposant une solution technique qui ne nécessite en particulier pas d'opérations de manipulations complexes et/ou imposant à l'opérateur de se baisser, supprimant toute pénibilité dans les manoeuvres d'accouplements entre chariots. D'un point de vue sécuritaire, par ailleurs, la conception privilégiée est incitative par rapport aux normes préconisées. Enfin, sur un plan économique, l'option technique retenue est également favorable pour les possesseurs de chariots, car elle n'impose pas la fabrication d'un timon par chariot.

Pour remplir ces objectifs, et d'autres qui seront apparents à la lecture de la description qui en est faite dans la suite, le chariot mobile de transport et de stockage de produits de l'invention, comporte les caractéristiques de la revendication 1.

En substance, l'invention est basée sur une structure d'attelage à timon non seulement amovible, c'est-à-dire au sens de l'invention détachable sans outil, manuellement, mais encore basculant par pivotement de sorte que sa manipulation soit la plus aisée possible, comme on le verra dans la suite. En outre, le caractère amovible permet le cas échéant de gérer le nombre de timons indépendamment du nombre de chariots, en vue d'inciter les utilisateurs à respecter les règles de sécurité en vigueur. L'intérêt est également économique pour l'utilisateur, qui n'est pas assujetti à disposer d'un timon d'attelage par chariot possédé, sachant que le coût d'un tel équipement est loin d'être négligeable.

En fait, plus précisément, dans la configuration de l'invention, la barre est montée pivotante au voisinage d'une de ses extrémités sur un support du timon muni de moyens d'accrochage amovible à la platine de fixation. Les conditions d'un basculement de la barre pour remplir sa fonction principale en vue de l'attelage des chariots résultent en pratique de ce montage à pivotement.

Selon une configuration possible, les moyens d'accrochage amovible peuvent consister en au moins deux plots de centrage dépassant d'une console fixée à une base dudit support, les plots étant orientés dans une direction parallèle à ladite base, et agencés pour s'insérer dans des orifices traversants pratiqués dans la platine de fixation. Ladite platine étant de préférence fixée au châssis de sorte à être sensiblement horizontale, le timon amovible se retrouve, lorsque la barre est dans sa position rétractée, avec une barre verticale et positionnée au voisinage du volume de stockage du chariot.

Cela résulte notamment du fait que le support peut se présenter, dans une configuration préférentielle de l'invention, sous la forme d'un profilé en U dont le fond constitue ladite base du support, qui peut alors comporter un arbre parallèle audit fond et reliant les deux parois en regard du U, la barre étant montée pivotante par rapport audit arbre. Un ressort de torsion rappelant la barre sensiblement parallèlement et à proximité du fond est ensuite interposé entre ladite barre et le support. En somme, le basculement vers la position horizontale de la barre, pour mettre en oeuvre l'attelage à un autre chariot est réalisé par l'opérateur à l'encontre de la force du ressort, et le basculement inverse pour en quelque sorte « ranger » la barre au voisinage du conteneur du chariot est automatique, généré par la force de rappel.

Pour finaliser l'opération d'attelage, la barre comporte des moyens d'accrochage à l'attache d'attelage d'un autre chariot. Plus particulièrement, selon l'invention, lesdits moyens d'accrochage peuvent consister en un orifice pratiqué au niveau de l'extrémité libre de la barre.

De son côté, l'attache d'attelage comporte par exemple une tige dépassant de la face inférieure d'une plaque de fond de l'attache d'attelage, qui est solidarisée horizontalement au châssis. Le fonctionnement est alors le suivant : la barre du timon est basculée par l'opérateur, en partant de sa position initiale sensiblement verticale, d'un angle supérieur à l'angle droit, de façon à que son extrémité libre atteigne un niveau situé en-dessous de l'extrémité libre de cette tige de l'attache d'attelage, pour que l'accouplement entre chariots puisse se faire en logeant ladite tige dans l'orifice équipant la barre à cet endroit.

Il est à noter que la barre pivotante comporte, à son extrémité proximale de la liaison de pivotement de la barre au support, au moins un patin en matériau résilient apte à former butée contre une surface inférieure plane d'une pièce fixée au châssis du chariot, lorsque la barre est en position déployée. Cette butée permet de réaliser le basculement propre à permettre l'accouplement entre chariots mentionné ci-dessus, sans pour autant permettre à l'extrémité libre de la barre de heurter le sol, au risque d'abîmer la barre et/ou le sol.

Par ailleurs, la barre pivotante comporte de préférence une poignée de manipulation, consistant par exemple en une tige fixée à l'extrémité libre de la barre pivotante et comportant une portion orientée perpendiculairement à un axe longitudinal de la barre. Cette portion peut être saisie par l'opérateur pour transporter le timon amovible lorsqu'il est retrié d'un chariot ou pour l'y amener. Secondairement, c'est sur cette partie du timon ou sur une portion de la barre qui en est voisine - lorsque le timon est accouplé à un premier chariot - que l'opérateur peut agir, par exemple avec son pied, pour faire basculer la barre à l'encontre du ressort de torsion et amener son extrémité sous la tige préférentiellement verticale de l'attache d'attelage d'un second chariot à accoupler au premier.

L'invention va à présent être décrite plus en détail, en référence aux figures annexées, qui ne représentent qu'un exemple non limitatif de l'invention, et pour lesquelles :
[Fig.1] représente en vue perspective le timon amovible ;
[Fig.2] illustre, en vue perspective, la platine de fixation amovible du timon à un chariot équipant un côté du chariot d'allure normale à la direction de roulage ;
[Fig.3] est une vue en perspective de l'attache d'attelage équipant le côté du chariot opposé à celui qui est équipé de la platine de la figure 2 ;
[Fig.4] est une vue en perspective du dessous d'un chariot selon l'invention, équipé de l'attache d'attelage visible au voisinage d'un côté du chariot ;
[Fig.5] montre, en vue perspective selon une autre incidence, le timon amovible en cours de couplage sur la platine de fixation solidarisée à l'autre côté du chariot ;
[Fig.6] illustre en vue perspective la barre du timon accouplé à un chariot et basculée pour fixation à un autre chariot (non représenté) ; et
[Fig.7] représente une vue en perspective d'un chariot figuré porte ouverte.

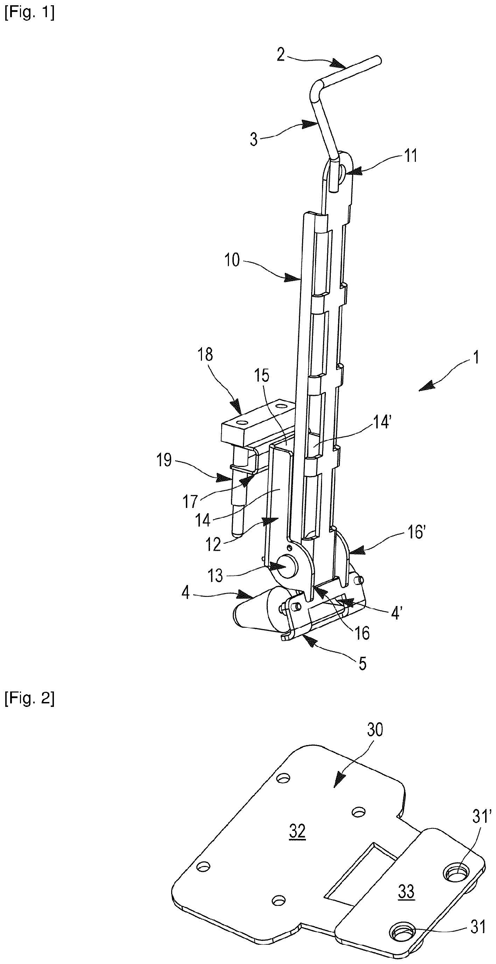

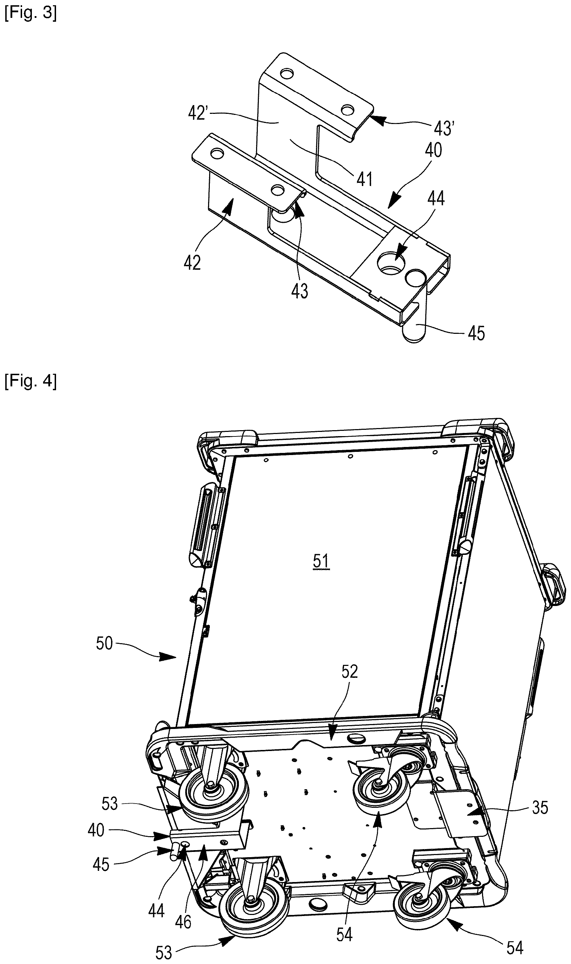

Le timon d'attelage 1 amovible de la figure 1 comporte une barre 10 dont l'une des extrémités est libre et dotée d'un orifice 11 destiné à coopérer avec un crochet d'attelage 40 fixé par exemple à l'arrière du chariot 50 (voir en figure 3). L'autre extrémité de la barre 10 est fixée par une liaison à pivotement à un support 12 basé sur un profilé en U. Celui-ci sert en quelque sorte de logement et de guide pour la barre 10 dans sa première position rétractée. Ladite barre 10 est montée à pivotement autour d'un arbre 13 reliant deux oreilles 16, 16' des parois latérales 14, 14' du profilé en U. Un ressort de torsion (non apparent) complète la liaison, monté de manière classique avec une première extrémité en appui contre le support 12 et une seconde extrémité en appui contre la barre 10.

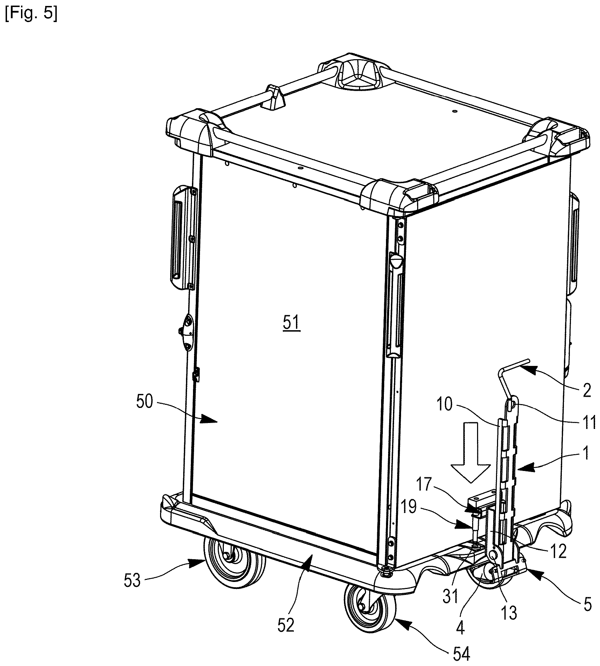

Une console 17 supportant un étrier 18 à deux plots 19, 19' est fixée sur le fond 15 dudit profilé en U, à l'extérieur de celui-ci. Il s'agit en fait d'un dispositif de centrage dont les deux plots 19, 19', qui présentent deux portions de diamètres différents, sont insérables dans une platine de fixation 30 (voir en figure 2) fixée à l'avant du chariot 50 et dotée de deux orifices 31, 31' de taille et d'écartement correspondants. Ces orifices 31, 31' sont de préférence chanfreinés, de manière à faciliter le centrage en vue de l'insertion des plots 19, 19', centrage qui est également rendu plus aisé par l'existence d'une première portion d'insertion des plots 19, 19' de diamètre réduit, au voisinage de leurs extrémités libres. L'orientation verticale de l'accouplement, visible par exemple en figure 5, permet d'utiliser le poids du timon 1 pour assurer la tenue mécanique de l'accouplement, en réalité surtout soumis à des contraintes d'allure horizontale en cours de fonctionnement. Cette verticalité rend au surplus l'amovibilité très aisée puisqu'il suffit, pour désaccoupler le timon 1 du chariot 50, de le tirer vers le haut.

Une poignée 2 est prévue à cet effet, réalisée sous la forme d'une tige métallique 3 dont une portion d'allure perpendiculaire à l'axe longitudinal de la barre 1 permet la préhension du timon 1, en vue des manipulations de montage, démontage ou transport. L'extrémité de la tige est fixée à proximité de l'orifice 11. A l'autre extrémité, solidaire de la barre 10 et de ses déplacements, des patins 4, 4' de forme substantiellement tronconique sont fixés à une plaque 5 prolongeant la barre 10, avec laquelle elle est de préférence d'un seul tenant. L'orientation de ladite plaque 5 et des patins qui lui sont normaux, ainsi que les dimensions desdits patins 4, 4', sont telles que lesdits patins 4, 4' arrivent en butée sur la surface inférieure d'une pièce 35 apparaissant en figure 4 et fixée sous le châssis 52 du chariot 50 lorsque la barre 10 est basculée pour réaliser l'accouplement avec l'attache d'attelage 40 d'un chariot 50 adjacent (explications plus détaillées ci-après).

La figure 2 montre la platine de fixation 30 qui est solidarisée par exemple à l'avant de chaque chariot 50, et qui comporte une plaque 33 d'allure trapézoïdale présentant les orifices 31, 31' chanfreinés prévus pour loger les plots 19, 19' du timon 1. Une seconde plaque 32 sensiblement rectangulaire est fixée au chariot, par exemple par des vis. Il est à noter que lorsque les plots 19, 19' sont insérés dans les orifices 31, 31', la paroi inférieure de la console 17 sert de butée contre la plaque 33.

La figure 3 montre l'attache d'attelage 40 solidarisé par exemple à l'arrière des châssis des chariots 50. Elle se compose de deux parties principales : d'un côté un étrier 41 de fixation au chariot 50 comportant deux ailes 42, 42' surmontées de cornières de fixation 43, 43', la fixation se faisant par exemple au moyen de vis. De l'autre côté, l'attache d'attelage 40 comporte un ensemble à orifice traversant 44 adjacent à une tige 45, laquelle s'étend vers le bas, c'est-à-dire dépasse de la face inférieure d'une plaque 46 de fond de l'attache d'attelage 40. La figure 4 montre le positionnement de cette attache 40 sous le châssis du chariot. La tige 45 dépassant vers le bas est particulièrement bien visible, ainsi que l'orifice 44. Ces deux moyens de couplage permettent le cas échéant un fonctionnement mâle/femelle inversé.

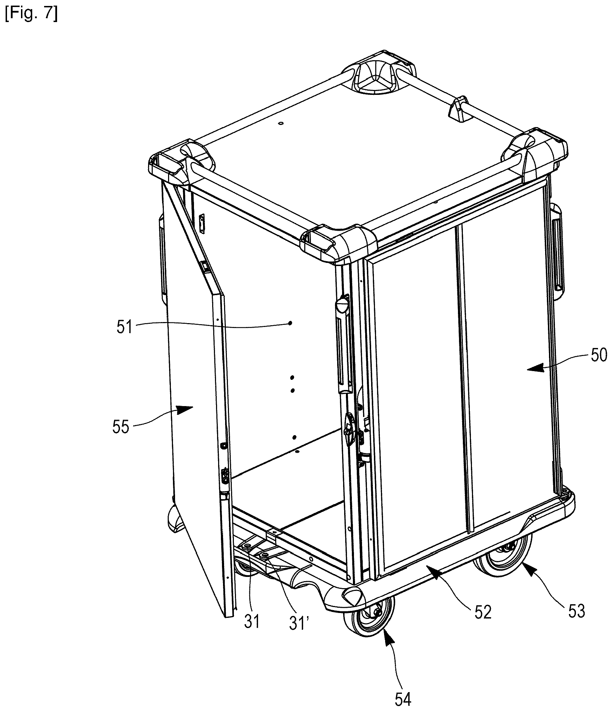

La figure 4 représente par ailleurs une configuration de chariot 50 selon l'invention, comportant un volume ou conteneur de stockage 51 fermé, accessible par au moins une porte (voir en figure 7) et surmontant un châssis 52 équipé de quatre roues, fonctionnant en l'occurrence avec des paires 54, 53, de roues respectivement avant et arrière de tailles différentes.

Le montage du timon 1 amovible apparaît en figure 5. Le timon 1, tenu par l'opérateur par la poignée 2, est descendu progressivement en centrant les plots 19, 19' dans les orifices chanfreinés 31, 31', l'insertion se faisant naturellement par gravité jusqu'à arriver en butée contre la paroi inférieure de la console 17. Le timon 1 est alors solidement accouplé au chariot 50. Il est à noter que dans la position de repos de la barre 10, elle est rétractée du fait de l'action du ressort de torsion, rendant le timon 1 compact, s'étendant dans une direction verticale au cours du transport, et dès lors particulier aisé à porter pour l'opérateur.

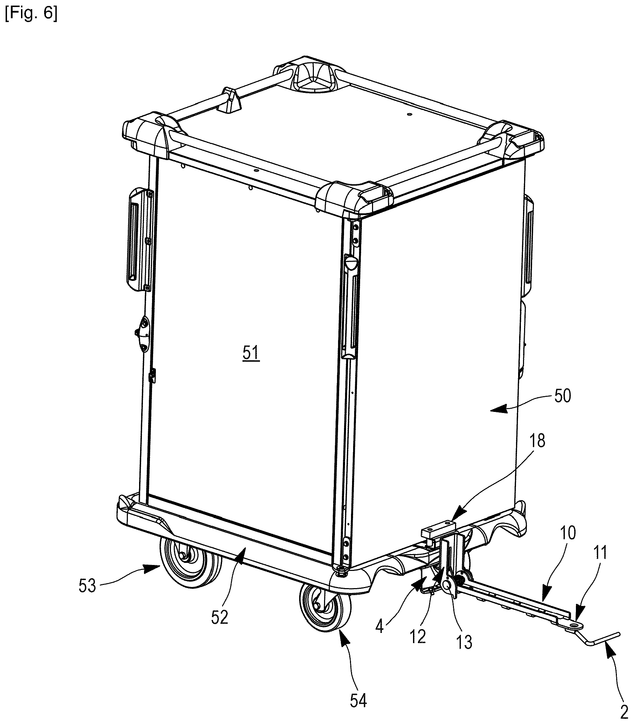

La barre 10 peut alors être basculée, comme montré en figure 6, jusqu'à ce que les patins élastiques 4, 4' soient en butée contre la plaque horizontale extérieure de la pièce 35 (voir en figure 4), ce qui représente un angle un peu supérieur à 90°. On note que, la barre se trouvant verticale et à une certaine distance de la façade proximale du chariot 50, notamment dans sa portion au-dessus du support 12 en U (voir en figure 5), il est facile pour l'opérateur de placer le pied entre ladite façade et la barre 10, et de solliciter cette dernière en un mouvement de pivotement vers le bas. En fin de basculement, c'est-à-dire lorsque les patins 4, 4' sont au contact de la plaque 35 (voir en figure 4), l'orifice 11 se trouve alors à un niveau inférieur à celui de l'extrémité libre de la tige 45, qui peut ensuite y être insérée. L'insertion s'effectue là encore très naturellement, la gravité étant ici remplacée par le couple de rappel exercé par le ressort de torsion interposé sur l'arbre 13 entre la barre 10 et le support 12 du timon 1.

La contrainte de rappel tend à faire remonter la barre 10, laquelle est toujours contrôlée par le pied de l'opérateur, l'orifice 11 logeant progressivement la tige 45 jusqu'à l'arrivée en butée de l'extrémité libre de la barre 10 contre la surface inférieure de la plaque de fond 46 de l'attache d'attelage 40 . L'accouplement au second chariot 50 est alors réalisé. Cet accouplement est également très robuste, puisque les efforts sont principalement horizontaux pendant le fonctionnement normal en cours de traction.

La figure 7 montre que les chariot 50 de l'invention peuvent être équipés d'au moins une porte 55 placée dans une façade du volume de stockage 51 qui est sensiblement normale au sens de roulage, ce qui n'est pas possible pour des chariots équipés de timons simplement rétractables comme dans de nombreuses configurations existantes, une telle porte se trouvant alors potentiellement bloquée. Dans le cas de l'invention, le timon 1 est simplement retiré pour ouvrir la porte.

Les exemples donnés ci-dessus ne sont pas exhaustifs de l'invention, qui englobe au contraire les variantes de forme et d'agencement entre les différents éléments (support, platine de fixation, attache d'attelage) à la portée de l'homme de l'art.

## Revendications

1. Chariot (50) mobile de transport et de stockage de produits comportant un volume fermé (51) dont l'espace intérieur est accessible via au moins une porte (55) et surmonte un châssis (52) équipé de roues (53, 54), ledit chariot (50) comportant des moyens d'attelage à deux autres chariots (50) dans la direction du roulage en vue de créer un train de chariots (50), lesdits moyens d'attelage comportant:
- un timon (1) de liaison détachable, comprenant une barre (10) pivotante mobile entre une première position déployée de liaison à un autre chariot (50) et une seconde position rétractée au voisinage du volume de stockage (51) du chariot (50) ;
- une platine (30) pour la fixation du timon (1) de liaison détachable au châssis (52) du chariot (50), ladite platine (30) étant solidarisée à l'un des côtés du châssis (52) du chariot (50) d'allure perpendiculaire à la direction de roulage ;
**caractérisé en ce que** le timon (1) est amovible, c'est-à-dire détachable de la platine (30) sans outil, manuellement, et **en ce que** le chariot comporte une attache d'attelage (40) d'une extrémité libre de la barre (10), ladite attache (40) étant fixée à l'autre côté du châssis (52) par rapport à la direction de roulage.

2. Chariot (50) mobile de transport et de stockage selon la revendication précédente, **caractérisé en ce que** la barre (10) est montée pivotante au voisinage d'une de ses extrémités sur un support (12) du timon (1) muni de moyens d'accrochage (19, 19') amovible à la platine (30) de fixation.

3. Chariot (50) mobile de transport et de stockage selon la revendication précédente, **caractérisé en ce que** les moyens d'accrochage consistent en au moins deux plots (19, 19') de centrage dépassant d'une console (17) fixée à une base (15) dudit support (12), les plots (19, 19') étant orientés dans une direction parallèle à ladite base (15), et agencés pour s'insérer dans des orifices (31, 31') traversants pratiqués dans la platine (30) de fixation.

4. Chariot (50) mobile de transport et de stockage selon l'une des revendications précédentes, **caractérisé en ce que** la platine (30) est fixée au châssis (52) de sorte à être sensiblement horizontale.

5. Chariot (50) mobile de transport et de stockage selon l'une des revendications 3 et 4, **caractérisé en ce que** le support (12) présente un profilé en U dont le fond (15) constitue ladite base (15) du support (12), et comporte un arbre (13) parallèle audit fond (15) et reliant les deux parois (14, 14') en regard du U, la barre (10) étant montée pivotante par rapport audit arbre (13), un ressort de torsion rappelant la barre (10) sensiblement parallèlement et à proximité du fond (15) étant interposé entre ladite barre (10) et le support (12).

6. Chariot (50) mobile de transport et de stockage selon l'une des revendications précédentes, **caractérisé en ce que** la barre (10) comporte des moyens d'accrochage (11) à l'attache d'attelage (40).

7. Chariot (50) mobile de transport et de stockage selon la revendication précédente, **caractérisé en ce que** les moyens d'accrochage consistent en un orifice (11) pratiqué au niveau de l'extrémité libre de la barre (10).

8. Chariot (50) mobile de transport et de stockage selon l'une des revendications précédentes, **caractérisé en ce que** l'attache d'attelage (40) comporte une tige (45) dépassant de la face inférieure d'une plaque de fond (46) de l'attache d'attelage (40), qui est solidarisée horizontalement au châssis (52).

9. Chariot (50) mobile de transport et de stockage selon la revendication 2, et optionnellement, selon l'une des revendications 3 à 8, **caractérisé en ce que** la barre (10) pivotante comporte, à son extrémité proximale de la liaison de pivotement de la barre (10) au support (12), au moins un patin (4, 4') en matériau résilient apte à former butée contre une surface inférieure plane d'une pièce (35) fixée au châssis (52), lorsque la barre (10) est en position déployée.

10. Chariot (50) mobile de transport et de stockage selon l'une des revendications précédentes, **caractérisé en ce que** la barre (10) pivotante comporte une poignée (2) de manipulation consistant en une tige (3) fixée à l'extrémité libre de la barre (10) pivotante et comportant une portion orientée perpendiculairement à un axe longitudinal de la barre (10). 1

## Patentansprüche

1. Mobiler Wagen (50) zum Transport und zur Lagerung von Erzeugnissen, umfassend ein geschlossenes Volumen (51), dessen Innenraum über mindestens eine Tür (55) zugänglich ist und ein mit Rädern (53, 54) ausgestattetes Fahrgestell (52) überragt, wobei der Wagen (50) Mittel zum Kuppeln an zwei andere Wagen (50) in Fahrtrichtung umfasst, im Hinblick auf ein Bilden eines Zugs von Wagen (50), wobei die Kupplungsmittel umfassen:
- eine abnehmbare Verbindungsdeichsel (1), aufweisend eine schwenkbare Stange (10), die zwischen einer ersten ausgefahrenen Position zur Verbindung mit einem anderen Wagen (50) und einer zweiten eingezogenen Position in der Nähe des Lagervolumens (51) des Wagens (50) bewegbar ist;
- eine Platte (30) zur Befestigung der abnehmbaren Verbindungsdeichsel (1) mit dem Fahrgestell (52) des Wagens (50), wobei die Platte (30) mit einer der Seiten des Fahrgestells (52) des Wagens (50) fest verbunden ist, dessen Stellung senkrecht zu der Fahrtrichtung verläuft;
**dadurch gekennzeichnet, dass** die Deichsel (1) lösbar ist, das heißt ohne Werkzeug manuell von der Platte (30) abnehmbar ist, und **dass** der Wagen eine Kupplungsverbindung (40) eines freien Endes der Stange (10) umfasst, wobei die Verbindung (40) an der anderen Seite des Fahrgestells (52) in Bezug auf die Fahrtrichtung befestigt ist.

2. Mobiler Transport- und Lagerwagen (50) nach dem vorstehenden Anspruch, **dadurch gekennzeichnet, dass** die Stange (10) in der Nähe eines ihrer Enden an einem Träger (12) der Deichsel (1) schwenkbar montiert ist, der mit Mitteln zum lösbaren Einhängen (19, 19') an der Befestigungsplatte (30) versehen ist.

3. Mobiler Transport- und Lagerwagen (50) nach dem vorstehenden Anspruch, **dadurch gekennzeichnet, dass** die Einhängemittel aus mindestens zwei Zentrierblöcken (19, 19') bestehen, die aus einem Halter (17) herausragen, der an einer Basis (15) des Trägers (12) befestigt ist, wobei die Blöcke (19, 19') in einer Richtung parallel zu der Basis (15) ausgerichtet und angeordnet sind, um sich in durchgehende Öffnungen (31, 31') einzufügen, die in der Befestigungsplatte (30) ausgebildet sind.

4. Mobiler Transport- und Lagerwagen (50) nach einem der vorstehenden Ansprüche, **dadurch gekennzeichnet, dass** die Platte (30) an dem Fahrgestell (52) befestigt ist, sodass sie im Wesentlichen horizontal ist.

5. Mobiler Transport- und Lagerwagen (50) nach einem der Ansprüche 3 und 4, **dadurch gekennzeichnet, dass** der Träger (12) ein U-Profil vorweist, dessen Boden (15) die Basis (15) des Trägers (12) bildet, und eine Welle (13) umfasst, die parallel zu dem Boden (15) ist und die zwei Wände (14, 14') mit dem U verbindet, wobei die Stange (10) in Bezug auf die Welle (13) schwenkbar montiert ist, wobei eine Torsionsfeder, die die Stange (10) im Wesentlichen parallel und in der Nähe des Bodens (15) zurückstellt, zwischen die Stange (10) und den Träger (12) gesetzt ist.

6. Mobiler Transport- und Lagerwagen (50) nach einem der vorstehenden Ansprüche, **dadurch gekennzeichnet, dass** die Stange (10) Einhängemittel (11) an der Kupplungsverbindung (40) umfasst.

7. Mobiler Transport- und Lagerwagen (50) nach dem vorstehenden Anspruch, **dadurch gekennzeichnet, dass** die Einhängemittel aus einer Öffnung (11) bestehen, die an dem freien Ende der Stange (10) ausgebildet ist.

8. Mobiler Transport- und Lagerwagen (50) nach einem der vorstehenden Ansprüche, **dadurch gekennzeichnet, dass** die Kupplungsverbindung (40) eine Stange (45) umfasst, die über die Unterseite einer Bodenscheibe (46) der Kupplungsverbindung (40) hinausragt, die mit dem Fahrgestell (52) horizontal fest verbunden ist.

9. Mobiler Transport- und Lagerwagen (50) nach Anspruch 2 und optional nach einem der Ansprüche 3 bis 8, **dadurch gekennzeichnet, dass** die schwenkbare Stange (10), an ihrem proximalen Ende der Schwenkverbindung der Stange (10) mit dem Träger (12), mindestens einen Puffer (4, 4') aus elastischem Material umfasst, der geeignet ist, einen Anschlag gegen eine ebene untere Oberfläche eines an dem Fahrgestell (52) befestigten Teils (35) auszubilden, wenn sich die Stange (10) in der ausgefahrenen Position befindet.

10. Mobiler Transport- und Lagerwagen (50) nach einem der vorstehenden Ansprüche, **dadurch gekennzeichnet, dass** die schwenkbare Stange (10) einen Betätigungsgriff (2) umfasst, der aus einer Stange (3) besteht, die an dem freien Ende der schwenkbaren Stange (10) befestigt ist und einen Abschnitt umfasst, der senkrecht zu einer Längsachse der Stange (10) ausgerichtet ist.

## Claims

1. A movable cart (50) for transporting and storing products, comprising a closed volume (51), the interior space of which is accessible via at least one door (55) and surmounts a frame (52) equipped with wheels (53, 54), said cart (50) comprising means for coupling to two other carts (50) in the direction of travel for the purpose of creating a train of carts (50), said coupling means comprising:
- a detachable connecting drawbar (1), comprising a pivoting bar (10) which is movable between a first deployed position for connection to another cart (50) and a second retracted position in the vicinity of the storage volume (51) of the cart (50);
- a plate (30) for fastening the detachable connecting drawbar (1) to the frame (52) of the cart (50), said plate (30) being secured to one of the sides of the frame (52) of the cart (50) having a course perpendicular to the direction of travel;
**characterized in that** the drawbar (1) is removable, i.e., detachable from the plate (30) manually and without a tool, and **in that** the cart comprises a coupling attachment (40) of a free end of the bar (10), said attachment (40) being fastened to the other side of the frame (52) relative to the direction of travel.

2. The movable transport and storage cart (50) according to the preceding claim, **characterized in that** the bar (10) is pivotally mounted in the vicinity of one of its ends on a support (12) of the drawbar (1), which support is provided with latching means (19, 19') and can be removed from the fastening plate (30).

3. The movable transport and storage cart (50) according to the preceding claim, **characterized in that** the latching means consist of at least two centering studs (19, 19') protruding from a bracket (17) which is fastened to a base (15) of said support (12), the studs (19, 19') being oriented in a direction parallel to said base (15) and being arranged to be inserted into through openings (31, 31') made in the fastening plate (30).

4. The movable transport and storage cart (50) according to any of the preceding claims, **characterized in that** the plate (30) is fastened to the frame (52) so that it is substantially horizontal.

5. The movable transport and storage cart (50) according to either of claims 3 and 4, **characterized in that** the support (12) has a U-shaped profile, the bottom (15) of which constitutes said base (15) of the support (12), and comprises a shaft (13) which is parallel to said bottom (15) and connects the two walls (14, 14') on either side of the U, the bar (10) being pivotally mounted relative to said shaft (13), a torsion spring which returns the bar (10) substantially parallel to and close to the bottom (15) being placed between said bar (10) and the support (12).

6. The movable transport and storage cart (50) according to any of the preceding claims, **characterized in that** the bar (10) comprises means (11) for latching to the coupling attachment (40).

7. The movable transport and storage cart (50) according to the preceding claim, **characterized in that** the latching means consist of an opening (11) made at the free end of the bar (10).

8. The movable transport and storage cart (50) according to any of the preceding claims, **characterized in that** the coupling attachment (40) comprises a rod (45) protruding from the lower face of a bottom plate (46) of the coupling attachment (40) which is horizontally secured to the frame (52).

9. The movable transport and storage cart (50) according to claim 2 and, optionally, according to any of claims 3 to 8, **characterized in that** the pivoting bar (10) comprises, at its proximal end of the pivot connection of the bar (10) to the support (12), at least one pad (4, 4') which is made of resilient material and able to abut a flat lower surface of a part (35) which is fastened to the frame (52) when the bar (10) is in the deployed position.

10. The movable transport and storage cart (50) according to any of the preceding claims, **characterized in that** the pivoting bar (10) comprises an operating handle (2) consisting of a rod (3) which is fastened to the free end of the pivoting bar (10) and comprises a portion which is oriented perpendicularly to a longitudinal axis of the bar (10).
